Europäisches Patentamt

European Patent Office

Office européen des brevets

(11) Veröffentlichungsnummer: **0 496 936 A1**

# EUROPÄISCHE PATENTANMELDUNG

(21) Anmeldenummer: **91114884.9**

(51) Int. Cl.5: **F16J 13/24**

(22) Anmeldetag: **04.09.91**

(30) Priorität: **30.01.91 DE 4102662**

(43) Veröffentlichungstag der Anmeldung:
**05.08.92 Patentblatt 92/32**

(84) Benannte Vertragsstaaten:
**AT BE CH DE DK ES FR GB GR IT LI LU NL SE**

(71) Anmelder: **Uhde GmbH**
**Friedrich-Uhde-Strasse 15**
**W-4600 Dortmund 1(DE)**

(72) Erfinder: **Hiltawski, Josef**
**Heidekamp 28**
**W-5840 Schwerte(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**W-4600 Dortmund 1(DE)**

(54) **Einrichtung zur Sicherung eines Klammerschnellverschlusses zur Fixierung des Deckels eines Druckgefässes.**

(57) Die Sicherung wird dadurch erreicht, daß an der Außenoberfläche des Deckels (3) und/oder des Druckbehälterflansches (2) im Anlagebereich an den U-Schenkeln (5a,5b) des Schnellverschlusses (5) und in der korrespondierenden Fläche der U-Schenkel Rast- bzw. Eingriffselemente (6,7) vorgesehen sind, die bei Druckbeaufschlagung bedingter geringfügiger Verschiebung des Deckels (3) ineinanderrasten.

Fig. 1

EP 0 496 936 A1

Die Erfindung richtet sich auf eine Einrichtung zur Sicherung eines Klammerschnellverschlusses zur Fixierung des Deckels eines Druckgefäßes, wobei der Klammerschnellverschluß am freien Ende des Druckbehälters einen Flanschbereich einerseits und einen Deckelbereich in der Verschlußlage andererseits etwa U-förmig umgreift.

Es ist bekannt, Druckgefäße mit sogenannten Klammerschnellverschlüssen zu verschließen, wobei die Druckbehälter mit einem Flanschbereich am oberen freien Ende versehen sind und der Deckel in seiner Außenkontur der Flanschkontur angepaßt ist, wobei zum Verschluß die nach außen ragenden freien Enden des Flansches bzw. Deckels vom klammerförmigen Schnellverschluß übergriffen werden, derart, daß bei Druckbeaufschlagung des Druckbehälters der Deckel an einer axialen Öffnungsbewegung durch den Schnellverschluß gehindert ist.

Bei großvolumigen Druckbehältern sind vergleichbare Verschlußklammern bekannt, s. hierzu DE-29 53 541-A1 oder EP-0 093 870-B2 der Anmelderin, wobei die ringförmigen Verschlußklammern als mindestens zweigeteilter Ring ausgebildet sind.

Aufgrund einer Optimierung sicherheitstechnischer Art ist man bemüht, dafür zu sorgen, daß es nicht zu einem versehentlichen Öffnen des unter Druck stehenden Behälters kommt, wobei eine bekannte Schutzeinrichtung darin besteht, daß die Schnellverschlüsse beispielsweise ein Druckentlastungsventil verriegeln, mit denen derartige Behälter werkseitig ausgerüstet sind.

Aufgabe der Erfindung ist es, den Deckel zusätzlich gegen ungewolltes Öffnen bei unter Druck stehendem Behälter zu schützen.

Diese Aufgabe wird gemäß der Erfindung dadurch gelöst, daß an der Außenoberfläche des Deckels und/oder des Druckbehälterflansches im Anlagebereich an den U-Schenkeln des Schnellverschlusses und in der korrespondierenden Fläche der U-Schenkel Rast- bzw. Eingriffselemente vorgesehen sind, die bei Druckbeaufschlagung bedingter geringfügiger Verschiebung des Deckels ineinanderrasten.

Durch die rastenden Eingriffselemente und das Verhaken dieser Elemente ineinander bei Druckbeaufschlagung wird erreicht, daß ein ungewolltes Lösen der Klammern dann nicht möglich ist, wenn der Behälter unter Druck steht. Erst durch die Druckentlastung und Absenken des Deckels bzw. der Möglichkeit, den Deckel geringfügig axial zu verschieben, kommen die rastenden Elemente außer Eingriff und die Klammern können gelöst werden.

In Ausgestaltung ist nach der Erfindung vorgesehen, daß in der Außenfläche des Deckels, des Flansches und/oder der innen liegenden Anlagefläche der U-Schenkel des Klammerverschlusses eine Eingriffsnut bzw. ein Eingriffssteg zum Ineinanderrasten vorgesehen sind.

Diese Gestaltung ist technisch vergleichsweise einfach zu verwirklichen, da Eingriffsnut und Eingriffssteg in spanabhebender Bearbeitung bzw. durch Anschrauben leicht eingebracht werden können.

Die Erfindung sieht aber auch vor, daß in den aneinanderliegenden Bereichen eine Mehrzahl von konzentrisch angeordneten Nuten/Kreisstegen vorgesehen sind. Eine Mehrzahl derartiger Nuten bzw. Stege macht es möglich, daß in diesen Bereichen insbesondere die U-Schenkel des Klammerverschlusses nicht zu extrem geschwächt werden.

Eine andere Ausgestaltung der Erfindung besteht darin, daß am Deckel und im U-Schenkel des Klammerverschlusses eine Vielzahl von Vorsprüngen bzw. Rastmulden ausgebildet sind.

Die Erfindung ist nachstehend anhand der Zeichnung beispielsweise näher erläutert. Diese zeigt in

Fig. 1      eine vereinfachte Schnittdarstellung durch den Verschlußbereich eines Druckgefäßes sowie in den

Fig. 2 und 3      abgewandelte Ausführungsbeispiele als Teilausschnitte.

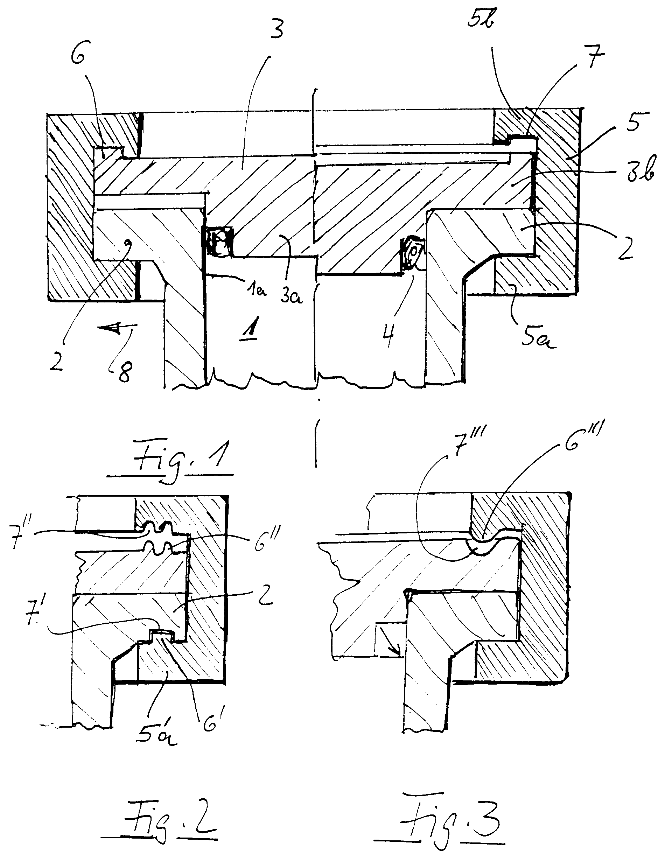

An einem in Fig. 1 allgemein mit 1 bezeichneten, vereinfacht und nur im Ausschnitt dargestellten Druckgefäß ist im Bereich der Öffnung ein nach außen weisender Flansch 2 vorgesehen. In die mit 1a bezeichnete Verschlußöffnung greift ein stopfenartiger Bereich 3a eines mit 3 bezeichneten Verschlußdeckels ein, wobei andeutungsweise Dichtungen 4 in der Zeichnung wiedergegeben sind.

Der Deckel 3 weist mit dem Flansch 2 korrespondierende Wandbereiche 3b auf, die von einem querschnittlich im wesentlichen U-förmigen Klammerschnellverschluß 5 mit U-Schenkeln 5a und 5b übergriffen werden.

In Fig. 1 ist in der linken Figurenhälfte der druckbeaufschlagte Zustand des Druckgefäßes 1 dargestellt, während die rechte Figurenhälfte eine Situation zeigt, wenn der Druckbehälter 1 nicht unter Druck steht.

Im außenseitigen Randbereich 3b weist der Deckel 3 einen Steg 6 auf, während in der korrespondierenden, nach innen weisenden Fläche des U-Schenkels 5b des Klammerschnellverschlusses 5 eine Nut 7 eingebracht ist, die mit dem Steg 6 im Deckel 3 korrespondiert.

Die Wirkungsweise ist dabei die folgende:
Wird im drucklosen Zustand (rechte Figurenhälfte Fig. 1) ein Deckel 3 aufgelegt, läßt sich der Klammerschnellverschluß 5 über den Flansch 2 bzw. den korrespondieren Randbereich 3b des Deckels 3 schieben und verspannen. Diese Position ist in der rechten Figurenhälfte in Fig. 1 dargestellt. Wird nun der Druckbehälter 1 mit Druck beaufschlagt, verschiebt sich der Deckel 3 geringfügig in Fig. 1 nach oben, derart, daß der Steg 6 in die Nut 7 eingreift, so daß sich diese Elemente miteinander verhaken. Ein versehentliches Abziehen des Klammerschnellverschlusses in Richtung des Pfeiles 8 wird damit sicher vermieden.

In Fig. 2 sind abgewandelte Ausführungsbeispiele dargestellt. Hier ist gezeigt, daß auch im Flansch 2 eine Nut 7' und im korrespondierenden U-Schenkel 5a ein entsprechender Steg 6' eingebracht sein kann, während der obere Teil der Fig. 2 zeigt, daß mehrere Nuten 7'' und mehrere Stege 6'' in den korrespondierenden Elementen eingebracht sein können.

Schließlich zeigt die Fig. 3 die Möglichkeit, am Umfang verteilte Vorsprünge 6''' und entsprechende Rastmulden 7''' auszubilden, um ggf. Schwächungen im Klammerschnellverschluß zu vermeiden.

**Patentansprüche**

1. Einrichtung zur Sicherung eines Klammerschnellverschlusses zur Fixierung des Deckels eines Druckgefäßes, wobei der Klammerschnellverschluß am freien Ende des Druckbehälters einen Flanschbereich einerseits und einen Deckelbereich in der Verschlußlage andererseits etwa U-förmig umgreift,
dadurch gekennzeichnet,
daß an der Außenoberfläche des Deckels (3) und/oder des Druckbehälterflansches (2) im Anlagebereich an den U-Schenkeln (5a,5b) des Schnellverschlusses (5) und in der korrespondierenden Fläche der U-Schenkel Rast- bzw. Eingriffselemente (6,7) vorgesehen sind, die bei Druckbeaufschlagung bedingter geringfügiger Verschiebung des Deckels (3) ineinander rasten.

2. Einrichtung nach Anspruch 1,
dadurch gekennzeichnet,
daß in der Außenfläche des Deckels (3), Flansches (2) und/oder der innen liegenden Anlagefläche der U-Schenkel (5a, 5b) des Klammerverschlusses (5) eine Eingriffsnut (7) bzw. ein Eingriffssteg (6) zum Ineinanderrasten vorgesehen sind.

3. Einrichtung nach Anspruch 1 oder 2,
dadurch gekennzeichnet,
daß in den aneinanderliegenden Bereichen eine Mehrzahl von konzentrisch angeordneten Nuten/Kreisstegen (6'',7'') vorgesehen sind.

4. Einrichtung nach einem der vorangehenden Ansprüche,
dadurch gekennzeichnet,
daß am Deckel (3) und im U-Schenkel (5a,5b) des Klammerverschlusses (5) eine Vielzahl von Vorsprüngen 6''' bzw. Rastmulden 7''' ausgebildet sind.

Fig. 1

Fig. 2

Fig. 3

Europäisches
Patentamt

# EUROPÄISCHER RECHERCHENBERICHT

Nummer der Anmeldung

EP 91 11 4884

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NL-A- 97 309 (GREER)<br>* Figuren 1-3 *<br>--- | 1-3 | F 16 J 13/24 |
| X | DE-A-3 148 034 (JASPER)<br>* Ganzes Dokument *<br>--- | 1,2 | |
| D,A | EP-A-0 093 878 (UHDE)<br>----- | | |

RECHERCHIERTE SACHGEBIETE (Int. Cl.5)

F 16 J

Der vorliegende Recherchenbericht wurde für alle Patentansprüche erstellt

| Recherchenort | Abschlußdatum der Recherche | Prüfer |
|---|---|---|
| DEN HAAG | 22-04-1992 | LEGER M.G.M. |

EPO FORM 1503 03.82 (P0403)